(19) Europäisches Patentamt
European Patent Office
Office européen des brevets

(11) **EP 2 190 659 B1**

(12) **EUROPEAN PATENT SPECIFICATION**

(45) Date of publication and mention
of the grant of the patent:
**16.03.2011 Bulletin 2011/11**

(51) Int Cl.:
**B32B 5/14** (2006.01)

(21) Application number: **08788899.6**

(22) Date of filing: **18.07.2008**

(86) International application number:
**PCT/IB2008/001883**

(87) International publication number:
**WO 2009/013589 (29.01.2009 Gazette 2009/05)**

(54) **COMPOSITE MATERIAL AND METHOD FOR ITS PRODUCTION**

VERBUNDMATERIAL UND HERSTELLUNGSVERFAHREN DAFÜR

MATÉRIAU COMPOSITE ET SON PROCÉDÉ DE PRODUCTION

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **20.07.2007 IT BO20070506**

(43) Date of publication of application:
**02.06.2010 Bulletin 2010/22**

(73) Proprietors:
• **DELTA - TECH S.p.A.**
**Altopascio (IT)**
• **Montanari, Italo**
**Collecchio (IT)**

(72) Inventors:
• **MONTANARI, Italo**
**Collecchio (IT)**
• **NIERI, Paolo**
**I-55029 Lucca (IT)**

(74) Representative: **Mangini, Simone et al**
**Studio Torta S.r.l.**
**Via Viotti, 9**
**10121 Torino (IT)**

(56) References cited:
**EP-A- 1 125 513     EP-A- 1 600 288**
**WO-A-98/38031**

• **RIDGARD C: "LOW TEMPERATURE CURING PREPREG SYSTEMS FOR HIGH TEMPERATURE RESISTANT, HIGH PERFORMANCE COMPOSITE MOULD TOOLS AND COMPONENTS" COMPOSITE POLYMERS, RAPRA TECHNOLOGY, SHAWBURY, SHREWSBURY, GB, vol. 2, no. 1, 1 January 1989 (1989-01-01), pages 1-15, XP000026689**
• **FLAKE C CAMPBELL ET AL: "Porosity in CarbonFiber Composites An Overview of Causes" JOURNAL OF ADVANCED MATERIALS, THE SOCIETY, COVINA, CA, US, vol. 26, no. 4, 1 July 1995 (1995-07-01), pages 18-33, XP009110948 ISSN: 1070-9789**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to a composite material, a method for its production, a use of such material, a product and an article comprising said material.

In particular, the present invention relates to a composite material having one first and one second outer layer and one inner layer, which comprises a first non-woven fibrous material and is positioned in contact between the first and the second layer; the first and the second outer layer are interconnected by means of at least one resin.

BACKGROUND ART

In the known composite materials of the type described above, the resin is usually distributed in a substantially uniform manner between the first and the second layer, saturating the inner layer.

Said materials, while featuring overall good mechanical characteristics, for some applications do not have sufficient resistance to peeling, resistance to penetration, absorption of impact energy and damping of mechanical and/or acoustic vibrations. Said materials also have a relatively high cost and weight (with equal thickness).

The drawbacks of the known materials are particularly felt in the automotive industry where new materials are being researched able to efficiently absorb impact energy in order to reduce injuries caused to third parties by accidents.

DISCLOSURE OF INVENTION

The object of the present invention is to provide a composite material, a method for its production, a use of said material, a product and an article comprising said material which overcome, at least partly, the drawbacks of the known art and are, at the same time, easy and inexpensive to produce.

The present invention accordingly provides a composite material, a method for its production, a use of said material, a product and an article comprising said material in accordance with the independent claims that follow and, preferably, with any one of the claims depending directly or indirectly on the independent claims.

Unless explicitly specified to the contrary, the following terms have the meaning indicated below.

In the present text, partially saturated fibrous material indicates a fibrous material comprising one or more substantially saturated or completely saturated areas.

In the present text, substantially saturated area indicates an area in which the fibres are inserted in a matrix defined by a resin. A group of fibres of a substantially saturated area have a flexibility which is markedly different from the flexibility of a group of fibres which are completely free of resin. Advantageously, the fibres of the substantially saturated area have a flexibility more similar to the flexibility of a group of fibres of a completely saturated area than the flexibility of a group of fibres free of resin. The substantially saturated areas can be completely saturated.

In the present text, completely saturated area indicates an area in which the fibres are inserted in a substantially continuous resin matrix. The fibres of a completely saturated area cannot move with respect to one another without breaking the resin matrix.

In the present text, substantially non-impregnated area indicates an area in which the fibres are completely devoid of resin or the fibres are impregnated with resin such that their flexibility is not remarkably different from the flexibility of the fibres completely devoid of resin; preferably, the flexibility of a group of fibres of the substantially non-impregnated area is more similar to the flexibility of a group of fibres free of resin than to the flexibility of a group of fibres of a completely saturated area.

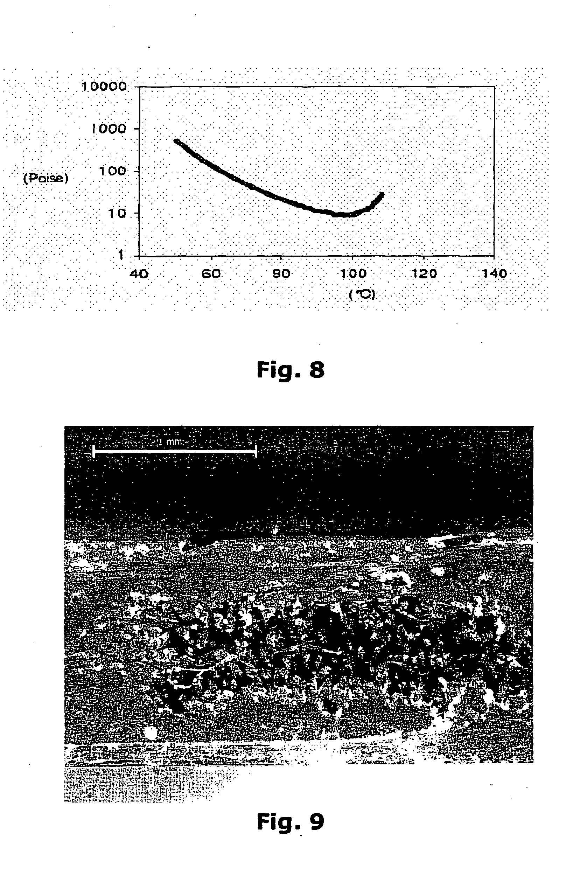

The substantially saturated areas and the substantially non-impregnated areas can be distinguished under an optical microscope; the substantially non-impregnated areas remain porous and similar to a structural foam (see in particular figures 9-11). In the optical microscope images the dark areas with larger dimensions (in particular with a dimension greater than 0.05 mm, advantageously 0.1 mm, more advantageously greater than 0.2) are the substantially non-impregnated areas. The areas featuring a plurality of white dots are the substantially saturated areas.

In the present text, needlepunched material indicates a fibrous material, preferably in ply form, which has undergone needlepunching.

In the present text, needlepunching indicates the treatment of a fibrous material in ply form; the treatment entails interlocking the fibres through the plane on which the ply lies and, preferably, in all directions. The needlepunching process usually involves pushing the fibres using needles.

As a result of the needlepunching process the fibres are distributed and positioned in the ply in a substantially random manner and so that at least part of the fibres cross the ply transversely from side to side.

BRIEF DESCRIPTION OF THE DRAWINGS

The invention will now be described with reference to the accompanying drawings, which illustrate some non-limiting embodiments thereof, in which:

- figure 1 illustrates experimental curves showing stress (Y axis) / tensile deformation (X axis) of three materials produced in accordance with the present invention and of a reference material;
- figure 2 illustrates experimental curves showing stress (Y axis) / flexural deformation (X axis) of three of the materials of figure 1;
- figure 3 illustrates schematically a cross section of a material produced in accordance with the present invention;
- figures 4-6 illustrate experimental curves showing force (Y axis) / time (X axis) of impact tests for three of the materials of figure 1 produced in accordance with the present invention;
- figure 7 illustrates an example of material produced in accordance with the present invention and fractured following an impact test;
- figure 8 illustrates the viscosity curve of the resin DT806R in conditions of constant heating at the speed of 2°C per minute starting from the room temperature; the X axis shows the temperature and the Y axis shows the viscosity;
- figures 9-11 are optical microscope photographs of cross sections of the materials of figure 1 produced in accordance with the present invention;
- figure 12 is a perspective view of a product, in particular a bodywork component, of the automotive industry;
- figure 13 illustrates schematically and partially in section a portion of an apparatus that can be used for perforation tests; and
- figure 14 schematically illustrates a detail of the apparatus of figure 13, with measurements in millimetres;
- figure 15 illustrates experimental curves showing force (Y axis) / displacement (X axis) of penetration tests for the four materials of figure 1.

BEST MODE FOR CARRYING OUT THE INVENTION

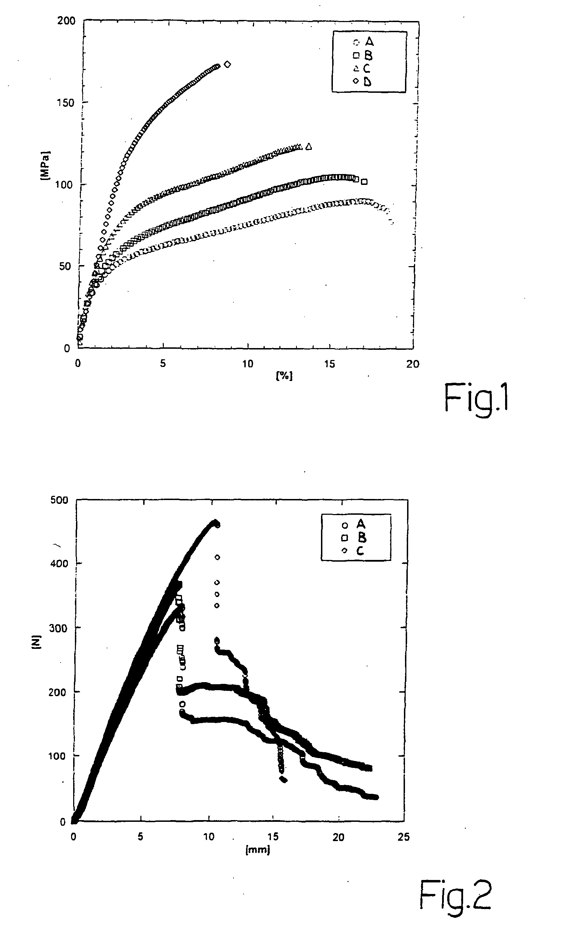

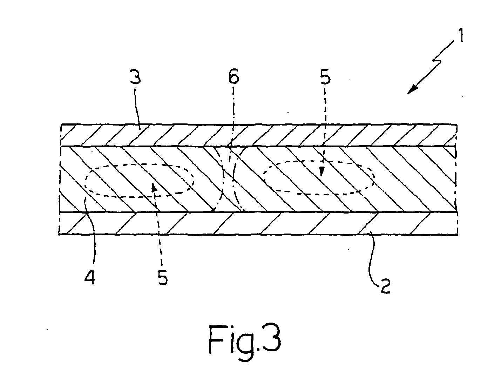

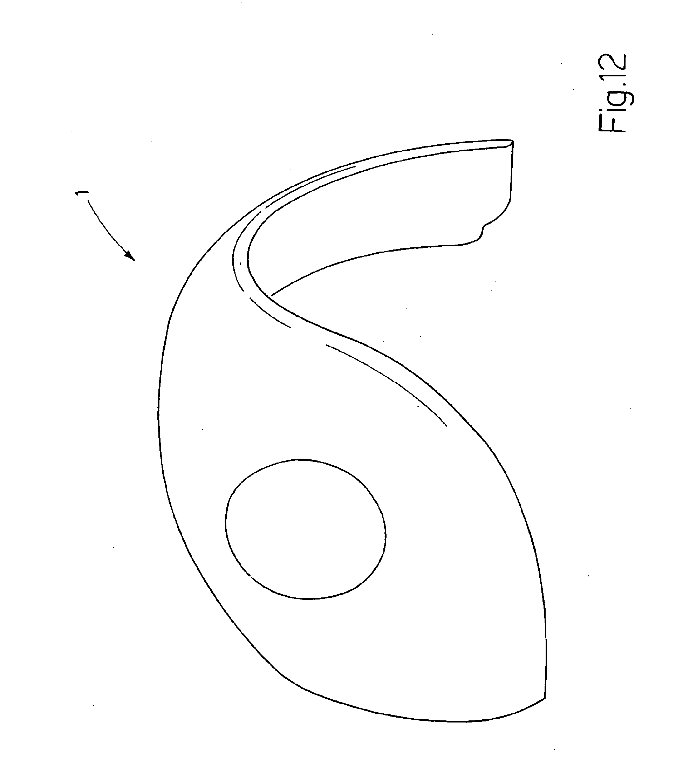

In figure 12, 1 indicates a product (partially illustrated in section) of the automotive industry, advantageously a car bodywork component (in particular a mudguard), made of composite material. With particular reference to figure 3, the composite material has a first and a second outer layer 2 and 3 and an inner layer 4, which comprises a first non-woven fibrous material and is positioned in contact between the first and the second layer 2 and 3; the first and the second layer 2 and 3 are interconnected by means of at least one resin; the inner layer is partially saturated by the resin and has at least one area 5 substantially not impregnated by the resin.

Advantageously, the inner layer 4 has a substantially non-impregnated volumetric fraction from 15% to 85%, advantageously from 20% to 85%, with respect to the total volume. According to some embodiments, the inner layer has a substantially non-impregnated volumetric fraction from 40% to 60%, advantageously from 45% to 55% with respect to the total volume. According to some embodiments, the inner layer has a substantially non-impregnated volumetric fraction from 60% to 85% with respect to its total volume; advantageously, from 65% to 85%; advantageously from 75% to 85%. According to some embodiments, the inner layer has a substantially non-impregnated volumetric fraction from 15% to 40% with respect to its total volume; advantageously from 20% to 30%.

Advantageously, the distance between the first layer 2 and the substantially non-impregnated area 5 is less than three times the distance between the second layer 3 and the substantially non-impregnated area 5; the distance between the second layer 3 and the substantially non-impregnated area 5 is less than three times the distance between the first layer 2 and the substantially non-impregnated area 5.

Advantageously, the inner layer 4 comprises an area 6 substantially saturated by the resin extending substantially uninterruptedly from the first to the second layer 2 and 3.

According to some advantageous embodiments, the first fibrous material is substantially saturated by the resin at the level of the first and second layer 2 and 3.

Advantageously, the inner layer 4 has a plurality of substantially non-impregnated areas 5.

According to alternative embodiments, the inner layer 4 comprises (advantageously consists of) at least one material chosen from the group consisting of: synthetic organic fibres (for example polyethylene, polypropylene, polyamidic, polyester, polyimidic, polybenzoxazole, polyheteroaromatic), artificial fibres (for example based on regenerated cellulose), natural fibres (for example cotton, hemp, linen, wool, asbestos), metallic fibres.

Advantageously, the non-woven fibrous material of the inner layer is a non-woven fabric. According to some embodiments, the inner layer consists of one single ply of fibrous material.

Advantageously, the non-woven fibrous material of the inner layer is grouped so as to define a ply; the fibres are distributed and oriented in the ply so that at least part of the fibres cross the ply transversely, thus extending uninterruptedly from the first to the second layer 2 and 3.

According to some particularly advantageous embodiments, the cited non-woven fibrous material is a needlepunched material. According to some embodiments, the first and the second layer 2 and 3 comprise a material chosen from the group consisting of: "classic" braided fabric, a seamed multiaxial fabric, a unidirectional strip of fibres, a non-woven fibrous layer, a wide-mesh net or fibrous structure, a pure resinous film, a plastic film or membrane, a metal sheet.

Advantageously, the first and the second layer 2 and 3 comprise, respectively, at least one second fibrous material and at least one third fibrous material. According to some embodiments, the second fibrous material is a braided material, in particular a woven material; the third fibrous material is a braided material, in particular a woven material.

According to some embodiments, the first layer 2 comprises a first resinous matrix impregnating the second fibrous material; the second layer 3 comprises a second resinous matrix impregnating the third fibrous material. Advantageously, the first and/or second resinous matrix comprise said resin.

According to some embodiments, the first layer 2 comprises a first resinous matrix impregnating the second fibrous material, while the second layer 3 contains no resinous element.

According to some advantageous embodiments, at least one of the first and second layer 2 and 3 consists of the resin; for example, the first layer can consist of PVC.

Advantageously, the first and the second layer 2 and 3 are substantially equal.

According to some embodiments, the resin is chosen from a group consisting of: thermosetting resin (for example epoxy, polyester, polyurethane, acrylic, benzoxazinic, bismaleimide, cyanate ester, phenolic), thermoplastic resin (for example polyolefinic, halogenated polyolefinic, polyester, polyamidic, thermoplastic polyurethane; polyether, polyimidic and their copolymers) and an alternative type of adhesive. According to some embodiments, the resin is an expanding or non-expanding resin. According to some embodiments, the resin is based on syntactic foams.

Advantageously the resin is a thermosetting resin. According to some embodiments, it is an epoxy resin.

According to a further aspect of the present invention, a method is provided for the production of a composite material as defined above.

The method comprises a first overlay step, during which an inner layer 4, comprising a first substantially non-impregnated non-woven fibrous material, is overlaid in contact with a first outer layer 2;

a second overlay step, in which a second outer layer 3 is overlaid in contact with the inner layer 4;

a migration step, in which part of a resin migrates from at least one of the first and second layer 2 and 3 inside the inner layer 4 so that the inner layer 4 is partially saturated by the resin and has at least one area substantially not impregnated by the resin;

a solidification step subsequent to the migration step and to the first and second overlay step and during which the resin is hardened.

Advantageously, the method comprises a compression step, subsequent to the first and second overlay step, during which a pressure is exerted on a structure comprising the inner layer 4 positioned in contact between the first and the second layer 2 and 3.

Advantageously, heat is supplied during the migration and/or solidification step.

Advantageously, the method comprises a step of propagation of the vacuum subsequent to the first and second overlay step and prior to the compression step; during the vacuum propagation step, gas present inside the inner layer 4 is removed.

Advantageously, the first layer 2 comprises a first resinous matrix and the second layer 3 comprises a second resinous matrix; said resin migrates from the first and from the second resinous matrix. According to further embodiments, said resin migrates from the first or from the second resinous matrix. Advantageously, the first and the second layer 2 and 3 comprise a fibrous material pre-impregnated with the first and the second resinous matrix respectively.

Advantageously, the inner layer 4, the first and the second layer 2 and 3 are defined according to the above description for the product 1.

In accordance with a further aspect of the present invention, there is provided a use of a material, which is defined as described above for the product 1, for the production of parts for the car and motorcycle industry. Advantageously, said material is provided for the production of components for car and motorcycle bodywork.

In accordance with a further aspect of the present invention, there is provided a use of a material, defined as described above for the product 1, for the production of articles for personal protection, for example: helmets (e.g. for building sites and/or for sports use), back protectors for motorcyclists, hockey, cricket and/or American football shields.

In accordance with a further aspect of the present invention, there are provided products for the car and motorcycle industry and articles for personal protection comprising a material as defined above.

For paradigmatic purposes, an approximate method is given below for evaluating the volumetric fraction of the substantially non-impregnated inner layer 4. The method is based on the assumption that the layers 2 and 3 are devoid of porosity and consist of 55% fibre and 45% resin in volume; the excess resin has migrated into the inner layer 3

$$X_{ni} = 100 - X_{impr.} = 100 - \frac{T_{rc}}{T_{rif}} \times 100$$

in which $X_{ni}$ represents the substantially non-impregnated volumetric percentage, $X_{impr.}$ represents the volumetric percentage of the substantially impregnated inner layer 4, $T_{rc}$ represents the resin thickness component present in the inner layer 4, $T_{rif}$ is the thickness available for impregnation by the resin in the inner layer 4 and is calculated by means of the following relation:

$$T_{rif} = T_c - T_n$$

in which $T_c$ indicates the thickness of the inner layer 4 and $T_n$ indicates the partial thickness of the fibre in the inner layer 4 and is calculated by means of the following relation:

$$T_n = \frac{FAWn}{D_n} \times 10^{-3}$$

in which FAWn indicates the grams per square metre (g/m$^2$) of the fibrous material of the inner layer 4 and $D_n$ (g/cm$^3$) is the density of the fibre of the inner layer 4.

$T_c$ is calculated by means of the following relation:

$$T_c = T_t - 3.63 \times 10^{-3} FAW / D_f$$

in which $T_t$ indicates the total thickness of the material (mm), FAW indicates the grams per square metre of the fibres of the layers 2 and 3 (g/m$^2$), $D_f$ indicates the density of the fibres of the layers 2 and 3 (g/cm$^3$).
$T_{rc}$ is calculated by means of the relation:

$$T_{rc} = T_r - T_{rs}$$

in which $T_r$ indicates the partial thickness of the resin, $T_{rs}$ indicates the partial thickness of the resin remaining in the layers 2 and 3 and is calculated by means of the following relation:

$$T_{rs} = 2 \times FAW / D_f \times 10^{-3} \times 45 / 55$$

$T_r$ is calculated by means of the relation:

$$T_r = Wr / D_r \times 10^{-3}$$

in which Dr indicates the density of the resin (g/cm$^3$), Wr indicates the grams per square metre per surface unit of the resin (g/m$^2$) and is calculated by means of the following relation:

$$Wr = 2 \times \frac{FAW \times RC}{(100 - RC)}$$

in which Rc is the percentage in weight of resin on the pre-impregnated fibrous material used for production of the layers 2 and 3.

The materials and products 1 obtained according to the present invention have resistance to peeling, absorption of impact energy, resistance to penetration and damping of relatively high mechanical and/or acoustic vibrations. Said materials furthermore have a relatively low cost and weight (with constant thickness).

The mechanical characteristics of the materials produced according to the present invention make the materials themselves extremely useful for the production of car and motorcycle components, in particular bodywork components, and for the production of articles for personal protection, for example: helmets (for building sites or for sports use), back protectors for motorcyclists, hockey, cricket or American football shields.

Further characteristics of the present invention will become clear from the following description of particular merely illustrative and non-limiting examples.

**Example 1**

This example describes the production of a composite material in which the inner layer has a substantially non-impregnated volumetric fraction of approximately 79% with respect to its total volume.

A panel measuring 30x30 cm was obtained by positioning a flock polyester fibre-based non-woven fabric, interlocked by means of needlepunching, Tessiltech PET//N SV type, 400 g/m$^2$ (manufactured by the company Edilfloor® - Vicenza - IT) between two outer layers each consisting of a layer of 380 g/m$^2$ glass fabric, Twill 2x2 style, based on 300 tex E glass roving, impregnated with approximately 36.4% in weight (expressed as a percentage of the total weight inclusive of resin and fibre) of resin type DT806R (manufactured by Delta-Tech™ Sr1).

The resin DT806R is a thermosetting epoxy resin with the following characteristics: curing temperature 65-140°C; gel time 50-60 minutes at 80°C, 15-19 minutes at 100°C, 4-6 minutes at 120°C, 2-3 minutes at 130°C; Tg after curing cycle 105-110°C after 600 minutes at 80°C, 115-125°C after 120 minutes at 100°C; viscosity curve shown in figure 8.

The Tessiltech PET//N SV type non-woven fabric is polyester fibre-based and has the following characteristics: weight per surface area 400 g/m2 (UNI EN 965); thickness 4.0 mm at 2kPa, 2.5 at 20kPa, 1.5 mm at 200kPa (UNI EN 964-1); longitudinal tensile strength 8.0 kN/m (UNI EN ISO 10319); longitudinal tensile elongation 110% (UNI EN ISO 10319); transverse tensile strength 11 kN/M (UNI EN ISO 10319); transverse tensile elongation 110% (UNI EN ISO 10319).

The moulding was performed on a flat metal surface, with flat metal counter-plate, having the same plan dimensions as the panel to be moulded. Both the plate and counterplate had been treated with detaching agent, according to normal practice for this type of moulding. The first outer layer of impregnated fabric was deposited on the pressing plate, then a layer of the polyester non-woven fabric, the second layer of impregnated fabric and the metal counter-plate were deposited on top of it in the above sequence. At this point, the panel and the counter-plate were covered with a layer of non-woven fabric similar to the one described above, in this case with the sole function of propagating the vacuum onto the surface of the counter-plate and along the edges, after which everything was sealed with a vacuum bag provided with valve for the vacuum connection, according to normal practice for the manufacture of composite material components by means of autoclave. In preparation of the vacuum bag, care was taken to ensure that the layer of non-woven fabric acting as vacuum propagator was in contact in some points with the non-woven fabric constituting the central part of the panel, so as to permit propagation of the vacuum inside it.

After creating the vacuum inside the bag, the entire assembly thus constituted was placed inside an autoclave and the pressure outside the vacuum bag was brought to 4 bars. Once this pressure had been reached, the vacuum inside the bag was reduced until the supply pressure inside the bag was equal to the atmospheric pressure outside the autoclave. The temperature was then increased to 100°C at a speed of 2÷3°C/min and kept at that temperature for 90 minutes. The temperature was then reduced to 60°C at a speed of approximately 5°C/min and the pressure of the autoclave was discharged to the outside. Lastly, the panel was taken out of the bag and separated from plate and counter-plate, at room temperature.

A cross section of the panel thus obtained is shown in figure 9.

**Example 2**

This example describes the production of a composite material in which the inner layer has a substantially non-impregnated volumetric fraction of approximately 60% with respect to its total volume.

The material is produced following the procedure of example 1 using a glass fabric impregnated with approximately 40.9% (instead of 36.4%) in weight (expressed as a percentage of the total weight inclusive of the resin and fibre) of resin type DT806R (manufactured by Delta-Tech™ Srl).

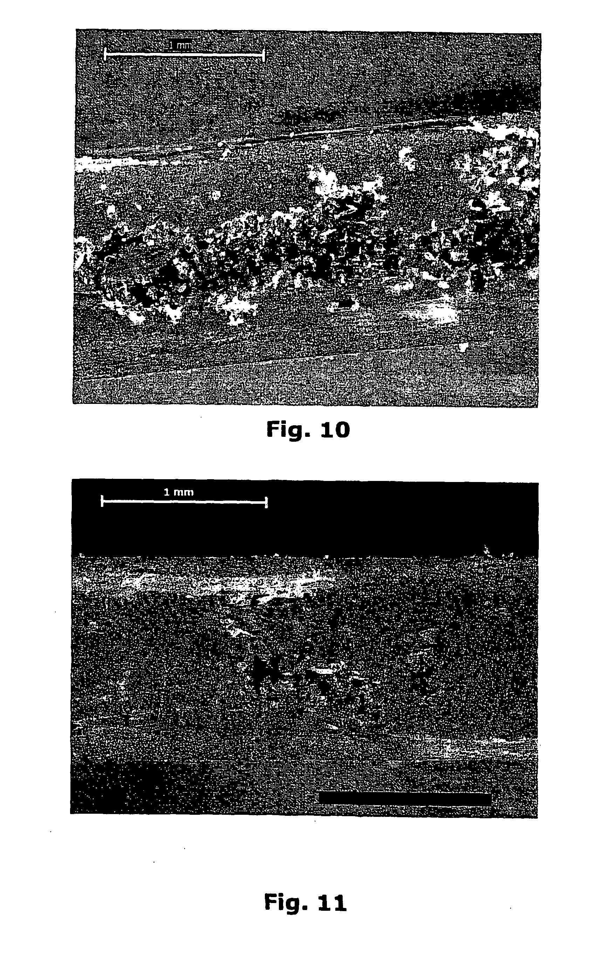

A cross section of a panel thus obtained is shown in figure 10.

## Example 3

This example describes the production of a composite material in which the inner layer has a substantially non-impregnated volumetric fraction of approximately 20% with respect to its total volume.

The material is produced following the procedure of example 1 using a glass fabric impregnated with approximately 49.4% (instead of 36.4%) in weight (expressed as a percentage of the total weight inclusive of resin and fibre) of resin type DT806R (manufactured by Delta-Tech™ Srl).

A cross section of a panel thus obtained is shown in figure 11.

## Example 4

This example describes the production of a composite material in which the inner layer has a substantially saturated volumetric fraction.

The material is produced by following the procedure of example 1 using a glass fabric impregnated with approximately 36.4% in weight (expressed as a percentage of the total weight inclusive of resin and fibre) of resin type DT806R (manufactured by Delta-Tech™ Srl) and a flock polyester fibre-based non-woven fabric (Tessiltech PET//N SV type) completely impregnated with resin (60% in weight).

## Example 5

This example describes traction tests performed on the materials obtained via the procedures described in examples 1 (material A), 2 (material B), 3 (material C) and 4 (material D).

The traction tests were performed according to the ASTM D3039 standard test method (ASTM is an acronym for American Society for Testing and Materials). This method provides for the testing of samples with dimensions of 25 mm width by 250 mm length. The traction speed is fixed at 5 mm/min and the test piece must be brought to breaking point. During the test the stress and deformation values are recorded. The tests were performed with configuration $\pm$ 45 (i.e. not in the direction of the warp or weft but obliquely at approximately 45° with respect to the warp and weft).

The parameters obtained from this test are: Young's modulus [MPa], tensile strength [MPa], extensibility [%].

The following table 1 shows the values of the above parameters relative to the materials tested.

For each type of material at least five samples were tested, therefore the table shows the mean value and the standard deviation of each parameter.

Table 1

| Material | Young's modulus [MPa] | Tensile strength [MPa] | Extensibility [%] |
|----------|----------------------|------------------------|-------------------|
| A | 7207 + 291 | 92.9 $\pm$ 2.3 | 17.85 $\pm$ 0.46 |
| B | 7560 $\pm$ 334 | 103.3 $\pm$ 3.2 | 15.06 $\pm$ 1.06 |
| C | 8292 $\pm$ 367 | 125.5 $\pm$ 3.2 | 12.63 $\pm$ 0.53 |
| D | 9163 $\pm$ 177 | 171.3 $\pm$ 5.9 | 7.72 $\pm$ 0.33 |

Figure 1 shows a comparison of the stress-deformation curves typical of the three materials; the X axis shows the percentage deformation and the Y axis shows the stress.

In these curves it can be seen that the strength shown by these materials is in general exceptionally and surprisingly high especially when compared with the typical behaviour of thermosetting matrix composite materials.

The initial section with high elastic module is followed by a section in which a continuous increase in the stress is noted but with less stiffness. This characteristic is essentially due to the partial impregnation of the non-woven fabric, which determines a particular load transfer mechanism. The non-woven fabric, in fact, can deform considerably without rupturing due to the presence of areas not impregnated with resin and which are therefore not subject to fractures at low levels of deformation.

As the impregnated fraction grows, the maximum deformation decreases but the stiffness in the second section of the curve increases.

The difference in behaviour between the material C and the material D is very significant.

## Example 6

This example describes flexion tests performed on the materials obtained by means of the procedures described in the examples 1-3.

The ASTM D790 standard test method was used for the flexion tests. The choice of this method was dictated by specific considerations concerning the material. In fact, category C methods are appropriate for sandwich structures, but the reduced thickness (compared to the traditional type sandwich structures) of these test pieces makes the method unsuitable.

According to the test method, there must be a specific ratio between the span and the thickness of the test piece. More specifically, the method considers ratios from 16 to 40 acceptable, although in the case of continuous fibre composite materials a ratio of 32 or 40 is recommended. In this test, therefore, a ratio of 40 was used.

In order to make the test more significant, sections with a width greater than the one indicated in the test method were used. In fact, due to a basically random distribution of the impregnation islands, it is important to choose a wide enough surface to avoid the risk of testing a test piece with a partial impregnation different from the nominal impregnation. This applies also to the preceding traction test, but the dimensions of the instrument clamps do not allow larger samples to be fixed. The flexion test was therefore performed on samples with dimensions of 50 mm x 80 mm, while the distance between the supports was fixed at 50 mm (the thickness being 1.27 mm).

In the flexion test the following parameters were analysed: flexural modulus [MPa]; flexural strength [MPa]; rupture deflection [%].

The test speed was fixed at 1.7 mm/min and at least 5 test pieces were tested for each material analysed, consequently the results shown in the following table 2 represent the mean values and the standard deviation calculated on the basis of the results of each individual test piece.

Table 2

| Material | Flexural modulus [MPa] | Flexural strength [MPa] | Rupture deflection [%] |
|----------|------------------------|-------------------------|------------------------|
| A | 16934 ± 1783 | 435.9 ± 9.7 | 7.72 ± 0.49 |
| B | 17501 ± 772 | 325.7 ± 18.6 | 7.84 ± 0.19 |
| C | 18350 ± 424 | 304.3 ± 16.5 | 11.11 ± 0.79 |

Figure 2 shows the most representative load-travel comparison curves of the materials tested; the X axis shows the travel and the Y axis the load.

All the samples tested broke gradually as a result of the flexion, the outermost fibres collapsing progressive by giving way first to the highest point of the curves (the flexural strength and rupture deflection values shown in the preceding table are taken at this point), followed by progressive collapse of the remaining parts of the sample.

It is important to note that the curves with the lowest partial impregnation levels continue to show a certain resistance even after breaking. In the case of samples C the descent of the curve immediately after the main rupture (i.e. the one corresponding to the maximum load) is much more sudden than the descent of the curves of the samples with the lowest impregnation levels.

Here again, this behaviour, surprising for composite materials, can be attributed to the presence of one or more substantially non-impregnated areas of the non-woven material which can deform, giving the material a bending capacity far superior to a normal composite material of analogous dimensions.

**Example 7**

This example describes impact tests performed on the materials obtained by means of the procedures described in examples 1-4.

The equipment used to perform the impact tests is the ball-drop impact tester. The impact is produced by a dart weighing 15.5 kg which falls from a known height, established by the operator, which can be up to 8 metres.

For performance of the tests, the ASTM D 5628-95 and ASTM F 736-81 standard test methods were referred to which indicate the best solution to be the use of removable supports provided with instruments, positioned on a bolted plate with log bolts embedded in a reinforced concrete base.

The dimensions of the test pieces used for the test are 20 cm x 40 cm. Four tests were performed for each type of lamina.

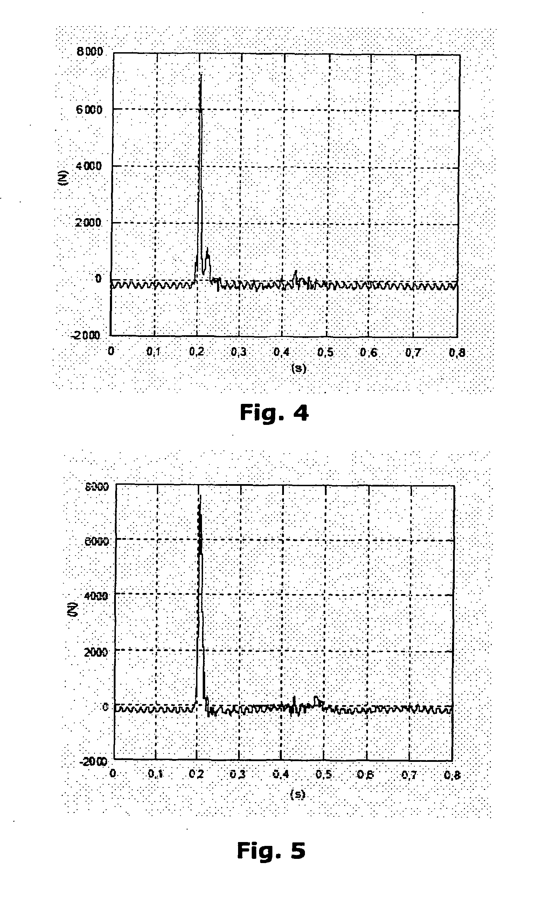

The results of the impact tests and the relative graphs are shown in table 3 and in figures 4 (material A), 5 (material B) and 6 (material C) respectively (the X axis shows the time and the Y axis shows the force).

This test measures the maximum load recorded, the impact energy necessary to cause breakage of the sample and the height at which the dart is positioned to record breakage of the sample.

The breakage height is determined by carrying out preliminary tests on samples of material of non-standard size; the definitive height is confirmed by testing the first sample cut according to the standard test size.

Table 3

| Material | Impact energy (J) | Max load (N) | Breaking height (m) |
|---|---|---|---|
| A | 388 | 7221 $\pm$ 142 | 3.3 |
| B | 321 | 7623 $\pm$ 150 | 2.8 |
| C | 321 | 9467 $\pm$ 179 | 2.8 |
| D | < 229 | 19890 $\pm$ 352 | < 2 |

In assessing the datum for material A, it is important to note that this sample shows an incomplete fracture but a high tear level of the gripping holes, even using the maximum number of holes available on the instrument. This meant that tests could not be performed from a greater height, therefore the 3.3 metre breaking height should be considered a lower limit for this material.

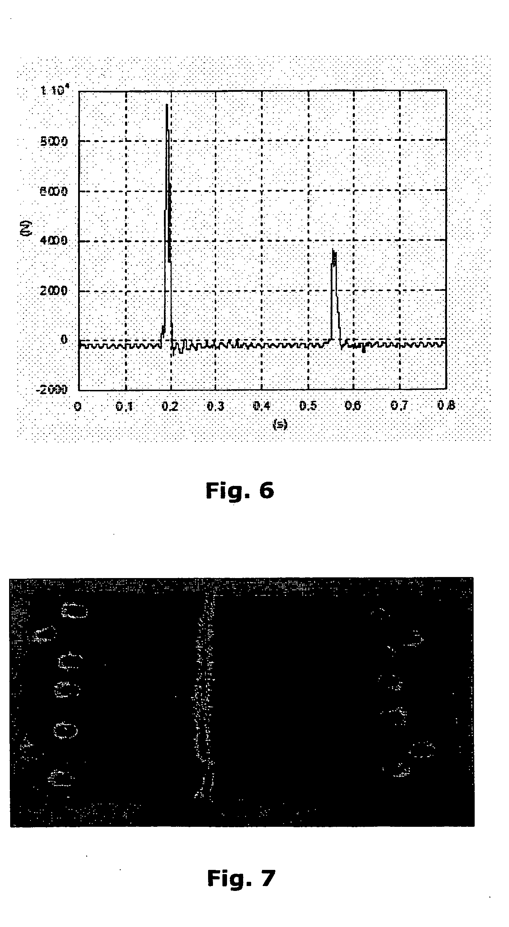

Figure 7 shows a typical example of the fracture obtained with these types of materials. It can be seen that the fracture is fairly clean-cut without excessive signs of peeling.

The results of the impact tests have shown that the materials A, B and C are surprisingly able to resist relatively high impact, dissipating considerable energy. The behaviour of material A, which has a higher breaking height than that of materials B and C, was particularly surprising. It should also be noted that material A showed greater dissipation of energy as shown by the lower maximum load value and that the dart bounces off the material C as shown by the double peak illustrated in figure 6. The breaking height for the material D should be considered an upper limit; in fact, the current configuration of the instrument does not permit the recording of data with drops from a height of less than 2 metres. Therefore this height is certainly greater than the breaking point of the material; consequently also the impact energy is certainly greater than the maximum that can be absorbed by the material.

Comparing the data obtained, materials A, B and C surprisingly have a considerably higher impact resistance and a markedly lower maximum force of impact (less than half) than material D.

**Example 8**

This example describes peeling tests performed on the materials obtained by means of the procedures described in examples 1-3.

The peeling tests were performed with a 90° configuration using a fixing device of the type indicated in the ASTM D 6862 standard test method.

The peeling tests were performed both on samples with fibres oriented at 0/90 and on samples with fibres oriented at $\pm$45 with respect to the main axis of the test piece and, therefore, with respect to the peeling direction.

The test pieces are of fixed dimensions equal to 25 mm x 220 mm and the peeling speed is equal to 127 mm/min.

During the test the peeling force versus time is recorded. The important parameters are the maximum peak of force necessary to trigger the peeling and the resistance to peeling measured, understood as the mean force during the peeling step divided by the width of the test piece.

The interesting datum obtained in this test is that the resistance to peeling is surprisingly higher than the resistance of the outer skin for all the samples tested. In fact, during the test, the outer skin broke instead of peeling.

Table 4 shows the maximum force values measured and the considerations made above concerning the resistance to peeling.

Table 4

| Material | Max Force [N] | Resistance to peeling [N/mm] |
|---|---|---|
| A (0/90) | 60.85 $\pm$ 0.63 | > 2.43 - Breaking, no peeling |
| A ($\pm$45) | 72.26 $\pm$ 5.13 | > 2.89 - Breaking, no peeling |
| B (0/90) | 71.64 $\pm$ 4.92 | > 2.86 - Breaking, no peeling |
| B ($\pm$45) | 71.79 $\pm$ 2.47 | > 2.87 - Breaking, no peeling |
| C (0/90) | 67.16 $\pm$ 5.48 | > 2.01 - Breaking, no peeling |
| C ($\pm$45) | 70.33 $\pm$ 2.35 | > 2.81 - Breaking, no peeling |

**Example 9**

The penetration test was performed by means of the standards and apparatus used for testing safety products that provide protection against piercing.

The apparatus was appropriately modified to permit adequate gripping of the composite materials to be tested.

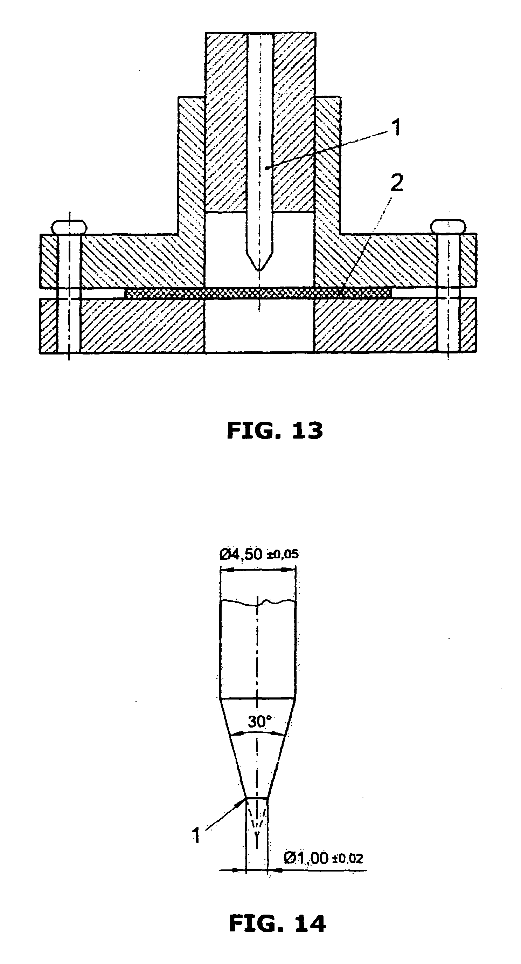

Figure 13 schematically illustrates a portion of the measuring apparatus used in the test. In figures 13 and 14 the reference number 1 indicates a penetration tip and the reference number 2 indicates the sample.

The penetration tip 1 had a hardness of 60 HRC and was provided with a truncated cone-shaped end.

The penetration speed of the nail was 10 mm/min. The resistance to penetration value was obtained from the value in Newtons of the force corresponding to the first decrease in the force-displacement graph.

The penetration resistance data shown in table 5 are obtained via a mean of at least five tests performed on different samples for each type of material analysed.

Table 5

| Material | Resistance to penetration [N] | Perforation displacement [mm] | Resistance to penetration [N] |
|---|---|---|---|
| A | 325 $\pm$ 20 | 1.75 $\pm$ 0.16 | 325 $\pm$ 20 |
| B | 340 $\pm$ 81 | 1.55 $\pm$ 0.18 | 340 $\pm$ 81 |
| C | 494 $\pm$ 28 | 1.51 $\pm$ 0.08 | 494 $\pm$ 28 |
| D | 477 $\pm$ 111 | 2.30 $\pm$ 0.44 | 477 $\pm$ 111 |

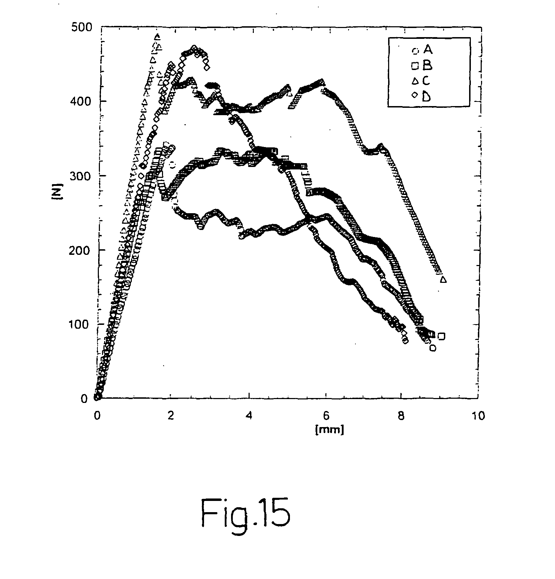

Figure 15 illustrates the penetration curves of the materials A, B, C and D. The Y axis shows the load and the X axis the displacement.

From the curves of figure 15 it can be observed that between the samples of the materials A, B and C there is a direct correlation between the values of resistance to penetration and perforation displacement and the level of impregnation. In particular, as the latter increases, an increase is noted in the resistance to penetration and a reduction in the perforation displacement. In the sample of material D no particular correlations are noted; in fact, the perforation displacement increases while the resistance value remains comparable to the one obtained for the material C.

It is important to stress that the curves relative to the materials A, B and C show a sort of plateau after penetration of the tip, highlighting that a certain amount of resistance is maintained even after perforation. In the sample of material D, on the other hand, after perforation there is a continuous and progressive drop in the load.

This behaviour is coherent with what has been observed in the other mechanical tests described previously. Also in this case the portion of substantially dry fibre in the inner layer confers greater strength which makes penetration of the conical portion of the tip more difficult, even after a first aperture has been made in the panel. The greater friction of the surface of the tip in contact with the portion of substantially non-impregnated fibres can also contribute to the greater resistance to penetration. In the sample of material D, on the other hand, the perforation proceeds more easily, once the laminate has undergone the first fracture due to the tip.

**Claims**

1. Composite material having a first and a second outer layer (2, 3) and an inner layer (4), which comprises a first non-woven fibrous material and is positioned in contact between the first and the second outer layer (2, 3); the first and the second outer layer (2, 3) are interconnected by means of at least one resin; the inner layer (4) being partially saturated by said resin and has at least one area (5) substantially not impregnated by the resin; the inner layer (4) having a substantially non-impregnated volumetric fraction from 15% to 85% with respect to its total volume; the inner layer (4) comprising an area (6), which is substantially saturated by the resin and extends substantially uninterruptedly from the first to the second outer layer (2, 3).

2. Material as claimed in claim 1, wherein the inner layer (4) has a substantially non-impregnated volumetric fraction from 20% to 80% with respect to its total volume.

3. Material as claimed in claim 2, wherein the inner layer (4) has a substantially non-impregnated volumetric fraction from 40% to 60% with respect to its total volume.

4. Material as claimed in claim 1 or 2 or 3, wherein the distance between the first outer layer (2) and the substantially non-impregnated area (5) is less than three times the distance between the second outer layer (3) and the substantially non-impregnated area (5); the distance between the second outer layer (3) and the substantially non-impregnated area (5) is less than three times the distance between the first outer layer (2) and the substantially non-impregnated area (5).

5. Material as claimed in one of the preceding claims, wherein the first fibrous materials is substantially saturated by the resin at the level of the first and second outer layer (2, 3).

6. Material as claimed in one of the preceding claims, wherein the inner layer has a plurality of substantially non-impregnated areas (5).

7. Material as claimed in one of the preceding claims, wherein the inner layer (4) consists of one single ply of fibrous material, in particular non-woven fabric.

8. Material as claimed in one of the preceding claims, wherein the first non-woven fibrous material is grouped so as to define a ply; the fibres are distributed and oriented in the ply so that at least part of the fibres cross the ply transversely, extending uninterruptedly from the first to the second outer layer (2, 3).

9. Material as claimed in claim 8, wherein the first non-woven fibrous material is a needlepunched material.

10. Material as claimed in one of the preceding claims, wherein the first and the second outer layer (2, 3) comprise, respectively, at least one second fibrous material and at least one third fibrous material.

11. Material as claimed in claim 10, wherein the second fibrous material is a braided, in particular woven, material; the third fibrous material is a braided, in particular woven, material.

12. Material as claimed in claim 10 or 11, wherein the first outer layer (2) comprises a first resinous matrix impregnating the second fibrous material; the second outer layer (3) comprises a second resinous matrix impregnating the third fibrous material.

13. Material as claimed in claim 12, wherein the first and/or second resinous matrix comprises said resin.

14. Material as claimed in one of the claims from 1 to 9, wherein at least one of the first and second outer layers (2, 3) consists of the resin.

15. Material as claimed in one of the preceding claims, wherein the first and the second outer layer (2, 3) are substantially equal.

16. Material as claimed in one of the preceding claims wherein said resin comprises an epoxy resin.

17. Method for the production of a composite material according to one of the preceding claims, and comprising:

a first overlaying step, in which an inner layer (4), which comprises a first substantially non-impregnated non-woven fibrous material, is overlaid in contact with a first outer layer (2);
a second overlaying step, in which a second outer layer (3) is overlaid in contact with the inner layer (4);
a migration step, in which part or a resin migrates from at least one of the first and second outer layers (2, 3) into the inner layer (4) so that the inner layer is partially saturated by the resin and has at least one area (5) substantially not impregnated by the resin;
a solidification step subsequent to the migration step, and to the first and second overlaying step and during which the resin is hardened.

18. Method as claimed in claim 17, comprising a step of compression, which is subsequent to the first and second overlaying step, and during which a pressure is exerted on a structure comprising the inner layer (4) positioned in contact between the first and the second outer layer (2, 3).

19. Method as claimed in claim 17 or 18 wherein heat is supplied during the migration and/or solidification step.

20. Method as claimed in one of the claims from 17 to 19, and comprising a step of propagation of the vacuum after the first and second overlaying step and preceding the compression step; during the vacuum propagation step, gas present, inside the inner layer (4) is removed.

21. Method as claimed in one of the claims from 17 to 20, wherein the first outer layer (2, 3) comprises a first resinous matrix and the second outer layer comprises a second resinous matrix; said resin migrates from the first and/or from the second resinous matrix.

22. Method as claimed in claim 21, wherein the resin migrates from the first and from the second resinous matrix.

23. Method as claimed in claim 21 or 22, wherein the first and the second outer layer (2, 3) comprise a fibrous material pre-impregnated with the first and the second resinous matrix respectively.

24. Use of a material as claimed in one of the claims from 1 to 16 for the production of parts (1) for the car and motorcycle industry.

25. Use as claimed in claim 24 for the production of car and motorcycle components.

26. Product of the car industry, comprising a material as claimed in one of the claims from 1 to 16.

27. Article for personal protection, comprising a material as claimed in one of the claims from 1 to 16.


**Patentansprüche**

1. Verbundmaterial, das eine erste und eine zweite äußere Schicht (2, 3) und eine innere Schicht (4) aufweist, die ein erstes faseriges Vliesmaterial umfasst und die kontaktierend zwischen der ersten und der zweiten äußeren Schicht (2, 3) angeordnet ist, wobei die erste und die zweite äußere Schicht (2, 3) mit Hilfe mindestens eines Harzes verbunden sind, wobei die innere Schicht (4) teilweise mit diesem Harz gesättigt ist und mindestens einen Bereich (5) aufweist, der im Wesentlichen nicht mit dem Harz imprägniert ist, wobei die innere Schicht (4) einen im Wesentlichen nicht imprägnierten Volumenanteil von 15 % bis 85 %, bezogen auf sein Gesamtvolumen, aufweist, wobei die innere Schicht (4) einen Bereich (6) umfasst, der im Wesentlichen mit dem Harz gesättigt ist und sich im Wesentlichen ununterbrochen von der ersten bis zu der zweiten äußeren Schicht (2, 3) erstreckt.

2. Material nach Anspruch 1, wobei die innere Schicht (4) einen im Wesentlichen nicht imprägnierten Volumenanteil von 20 % bis 80 %, bezogen auf ihr Gesamtvolumen, aufweist.

3. Material nach Anspruch 2, wobei die innere Schicht (4) einen im Wesentlichen nicht imprägnierten Volumenanteil von 40 % bis 60 %, bezogen auf ihr Gesamtvolumen, aufweist.

4. Material nach Anspruch 1 oder 2 oder 3, wobei der Abstand zwischen der ersten äußeren Schicht (2) und dem im Wesentlichen nicht imprägnierten Bereich (5) kleiner als dreimal der Abstand zwischen der zweiten äußeren Schicht (3) und dem im Wesentlichen nicht imprägnierten Bereich (5) ist, wobei der Abstand zwischen der zweiten äußeren Schicht (3) und dem im Wesentlichen nicht imprägnierten Bereich (5) kleiner als dreimal der Abstand zwischen der ersten äußeren Schicht (2) und dem im Wesentlichen nicht imprägnierten Bereich (5) ist.

5. Material nach einem der vorhergehenden Ansprüche, wobei das erste faserige Material nahe bei der ersten und der zweiten äußeren Schicht (2, 3) im Wesentlichen mit dem Harz gesättigt ist.

6. Material nach einem der vorhergehenden Ansprüche, wobei die innere Schicht eine Vielzahl von im Wesentlichen nicht imprägnierten Bereichen (5) aufweist.

7. Material nach einem der vorhergehenden Ansprüche, wobei die innere Schicht (4) aus einer einzigen Lage aus einem faserigen Material, vor allem einem Vliesstoff, besteht.

8. Material nach einem der vorhergehenden Ansprüche, wobei das erste faserige Vliesmaterial so angeordnet ist, dass es eine Lage definiert, wobei die Fasern so in der Lage verteilt und orientiert sind, dass mindestens ein Teil der Fasern die Lage quer durchziehen und sich dabei ohne ununterbrochen von der ersten bis zu der zweiten äußeren Schicht (2, 3) erstrecken.

9. Material nach Anspruch 8, wobei das erste faserige Vliesmaterial ein Nadelfilzmaterial ist.

10. Material nach einem der vorhergehenden Ansprüche, wobei die erste äußere Schicht (2) mindestens ein zweites faseriges Material und die zweite äußere Schicht (3) mindestens ein drittes faseriges Material umfasst.

11. Material nach Anspruch 10, wobei das zweite faserige Material ein geflochtenes, vor allem gewebtes Material ist und wobei das dritte faserige Material ein geflochtenes, vor allem gewebtes Material ist.

12. Material nach Anspruch 10 oder 11, wobei die erste äußere Schicht (2) eines erste Harzmatrix umfasst, die das zweite faserige Material imprägniert, und wobei die zweite äußere Schicht (3) eine zweite Harzmatrix umfasst, die das dritte faserige Material imprägniert.

13. Material nach Anspruch 12, wobei die erste und/oder die zweite Harzmatrix das besagte Harz umfasst.

14. Material nach einem der Ansprüche 1 bis 9, wobei die erste und/oder die zweite äußere Schicht (2, 3) aus dem Harz besteht.

15. Material nach einem der vorhergehenden Ansprüche, wobei die erste und die zweite äußere Schicht (2, 3) im Wesentlichen gleich sind.

16. Material nach einem der vorhergehenden Ansprüche, wobei das besagte Harz ein Epoxidharz umfasst.

17. Verfahren zur Herstellung eines Verbundmaterials nach einem der vorhergehenden Ansprüche, das umfasst:

einen ersten Überlagerungsschritt, in dem eine innere Schicht (4), die ein erstes im Wesentlichen nicht imprägniertes faseriges Vliesmaterial umfasst, kontaktierend auf eine erste äußere Schicht (2) aufgebracht wird;
einen zweiten Überlagerungsschritt, in dem eine zweite äußere Schicht (3) kontaktierend auf die innere Schicht (4) aufgebracht wird;
einen Wanderungsschritt, in dem ein Teil des Harzes von der ersten Schicht (2) und/oder der zweiten Schicht (3) in die innere Schicht (4) wandert, so dass die innere Schicht teilweise mit dem Harz gesättigt wird und mindestens einen Bereich (5) aufweist, der im Wesentlichen nicht mit dem Harz imprägniert ist;
einen Verfestigungsschritt, der auf den Wanderungsschritt und den ersten Überlagerungsschritt und den zweiten Überlagerungsschritt folgt, in dessen Verlauf das Harz aushärtet.

18. Verfahren nach Anspruch 17, das einen Verdichtungsschritt umfasst, der auf den ersten Überlagerungsschritt und den zweiten Überlagerungsschritt folgt, in dessen Verlauf ein Druck auf eine Struktur ausgeübt wird, die die innere Schicht (4) umfasst, die kontaktierend zwischen der ersten und der zweiten äußeren Schicht (2, 3) angeordnet ist.

19. Verfahren nach Anspruch 17 oder 18, wobei im Laufe des Wanderungsschrittes und/oder des Verfestigungsschrittes Wärme zugeführt wird.

20. Verfahren nach einem der Ansprüche 17 bis 19, das nach dem ersten Überlagerungsschritt und dem zweiten Überlagerungsschritt und vor dem Verfestigungsschritt einen Schritt umfasst, in dem ein Vakuum angelegt wird, wobei in dem Schritt, in dem das Vakuum angelegt wird, Gas entfernt wird, das in der inneren Schicht (4) enthalten ist.

21. Verfahren nach einem der Ansprüche 17 bis 20, wobei die erste äußere Schicht (2, 3) eine erste Harzmatrix umfasst und die zweite äußere Schicht eine zweite Harzmatrix umfasst, wobei das Harz von der ersten und/oder der zweiten Harzmatrix wandert.

22. Verfahren nach Anspruch 21, wobei das Harz von der ersten und von der zweiten Harzmatrix wandert.

23. Verfahren nach Anspruch 21 oder 22, wobei die erste und die zweite äußere Schicht (2, 3) ein faseriges Material umfassen, das mit der ersten Harzmatrix bzw. der zweiten Harzmatrix vorimprägniert ist.

24. Verwendung eines Materials nach einem der Ansprüche 1 bis 16 für die Herstellung von Teilen (1) für die Automobil- und die Motorradindustrie.

**25.** Verwendung nach Anspruch 24 für die Herstellung von Automobil- und Motorradkomponenten.

**26.** Produkt der Automobilindustrie, das ein Material nach einem der Ansprüche 1 bis 16 umfasst.

**27.** Gegenstand für den persönlichen Schutz, der ein Material nach einem der Ansprüche 1 bis 16 umfasst.

**Revendications**

**1.** Matériau composite possédant une première couche extérieure et une seconde couche extérieure (2, 3) et une couche intérieure (4), laquelle comprend un premier matériau fibreux non-tissé et est positionnée en contact entre la première couche extérieure et la seconde couche extérieure (2, 3); la première couche extérieure et la seconde couche extérieure (2, 3) sont interconnectées au moyen d'au moins une résine ; la couche intérieure (4) est partiellement saturée par ladite résine et possède au moins une zone (5) qui est sensiblement non imprégnée par la résine ; la couche intérieure (4) présente une fraction volumétrique sensiblement non imprégnée allant de 15% à 85% par rapport à son volume total ; la couche intérieure (4) comprend une zone (6), qui est sensiblement saturée par la résine et qui s'étend sensiblement sans interruption de la première couche extérieure à la seconde couche extérieure (2, 3).

**2.** Matériau selon la revendication 1, dans lequel la couche intérieure (4) présente une fraction volumétrique sensiblement non imprégnée allant de 20% à 80% par rapport à son volume total.

**3.** Matériau selon la revendication 2, dans lequel la couche intérieure (4) présente une fraction volumétrique sensiblement non imprégnée allant de 40% à 60% par rapport à son volume total.

**4.** Matériau selon la revendication 1 ou 2 ou 3, dans lequel la distance entre la première couche extérieure (2) et la zone sensiblement non imprégnée (5) est inférieure à trois fois la distance entre la seconde couche extérieure (3) et la zone sensiblement non imprégnée (5) ; la distance entre la seconde couche extérieure (3) et la zone sensiblement non imprégnée (5) est inférieure à trois fois la distance entre la première couche extérieure (2) et la zone sensiblement non imprégnée (5).

**5.** Matériau selon l'une des revendications précédentes, dans lequel le premier matériau fibreux est sensiblement saturé par la résine au niveau de la première couche extérieure et de la seconde couche extérieure (2, 3).

**6.** Matériau selon l'une des revendications précédentes, dans lequel la couche intérieure possède une pluralité de zones sensiblement non imprégnées (5).

**7.** Matériau selon l'une des revendications précédentes, dans lequel la couche intérieure (4) est constituée d'une seule strate de matériau fibreux, en particulier de non-tissé.

**8.** Matériau selon l'une des revendications précédentes, dans lequel le premier matériau fibreux non-tissé est groupé de manière à définir une strate ; les fibres sont distribuées et orientées dans la strate de telle sorte qu'au moins une partie des fibres traverse la strate transversalement, en s'étendant sans interruption de la première couche extérieure à la seconde couche extérieure (2, 3).

**9.** Matériau selon la revendication 8, dans lequel le premier matériau fibreux non-tissé est un matériau aiguilleté.

**10.** Matériau selon l'une des revendications précédentes, dans lequel la première couche extérieure et la seconde couche extérieure (2, 3) comprennent, respectivement, au moins un deuxième matériau fibreux et au moins un troisième matériau fibreux.

**11.** Matériau selon la revendication 10, dans lequel le deuxième matériau fibreux est un matériau tressé, en particulier tissé ; le troisième matériau fibreux est un matériau tressé, en particulier tissé.

**12.** Matériau selon la revendication 10 ou 11, dans lequel la première couche extérieure (2) comprend une première matrice résineuse imprégnant le second matériau fibreux ; la seconde couche extérieure (3) comprend une seconde matrice résineuse imprégnant le troisième matériau fibreux.

13. Matériau selon la revendication 12, dans lequel la première et/ou la seconde matrice résineuse comprend ladite résine.

14. Matériau selon l'une des revendications 1 à 9, dans lequel au moins une des première et seconde couches extérieures (2, 3) est constituée par la résine.

15. Matériau selon l'une des revendications précédentes, dans lequel la première couche extérieure et la seconde couche extérieure (2, 3) sont sensiblement égales.

16. Matériau selon l'une des revendications précédentes, dans lequel ladite résine comprend une résine époxy.

17. Procédé de production d'un matériau composite selon l'une des revendications précédentes, comprenant :

   une première étape de recouvrement, dans laquelle une couche intérieure (4), qui comprend un premier matériau fibreux non-tissé sensiblement non imprégné, est recouverte avec contact par une première couche extérieure (2) ;
   une seconde étape de recouvrement, dans laquelle une seconde couche extérieure (3) est recouverte avec contact par la couche intérieure (4) ;
   une étape de migration, dans laquelle une partie de la résine migre d'au moins une des première et seconde couches extérieures (2, 3) jusque dans la couche intérieure (4) de sorte que la couche intérieure est partiellement saturée par la résine et possède au moins une zone (5) sensiblement non saturée par la résine ;
   une étape de solidification qui fait suite à l'étape de migration, et à la première étape de revêtement et à la seconde étape de revêtement et durant laquelle la résine est solidifiée.

18. Procédé selon la revendication 17, comprenant une étape de compression, qui fait suite aux première et seconde étapes de recouvrement, et durant laquelle une pression est exercée sur une structure comprenant la couche intérieure (4) positionnée en contact entre la première couche extérieure et la seconde couche extérieure (2, 3).

19. Procédé selon la revendication 17 ou 18, dans lequel de la chaleur est apportée durant l'étape de migration et/ou de solidification.

20. Procédé selon l'une des revendications 17 à 19, comprenant une étape de mise sous vide après les première et seconde étapes de revêtement et avant l'étape de compression ; du gaz présent à l'intérieur de la couche intérieure (4) est retiré durant l'étape de mise sous vide.

21. Procédé selon l'une des revendications 17 à 20, dans lequel la première couche extérieure (2, 3) comprend une première matrice résineuse et la seconde couche extérieure comprend une seconde matrice résineuse ; ladite résine migre de la première et/ou de la seconde matrice résineuse.

22. Procédé selon la revendication 21, dans lequel la résine migre de la première et de la seconde matrice résineuse.

23. Procédé selon la revendication 21 ou 22, dans lequel la première couche extérieure et la seconde couche extérieure (2, 3) comprennent un matériau fibreux préimprégné avec respectivement la première matrice résineuse et la seconde matrice résineuse.

24. Utilisation d'un matériau selon l'une des revendications 1 à 16 pour la production de pièces (1) pour l'industrie de construction automobile et de motocycles.

25. Utilisation selon la revendication 24 pour la production de composants automobiles et motocycles.

26. Produit de l'industrie automobile, comprenant un matériau selon l'une des revendications 1 à 16.

27. Article pour la protection des personnes, comprenant un matériau selon l'une des revendications 1 à 16.

Fig.1

Fig.2

Fig.3

**Fig. 4**

**Fig. 5**

**Fig. 6**

**Fig. 7**

**Fig. 8**

**Fig. 9**

**Fig. 10**

**Fig. 11**

Fig.12

**FIG. 13**

**FIG. 14**

Fig.15